# EUROPEAN PATENT SPECIFICATION

(11) **EP 1 163 497 B1**
(45) Date of publication and mention of the grant of the patent: **12.05.2004**
(21) Application number: 00915795.9
(22) Date of filing: 18.02.2000
(51) Int. Cl.: G01J 3/30, G01J 1/58, G01N 21/25, G01N 21/64, G01N 35/02

(54) **PRODUCING AND MEASURING LIGHT AND DETERMINING THE AMOUNTS OF ANALYTES IN MICROPLATE WELLS**
LICHTERZEUGUNG, LICHTMESSUNG UND BESTIMMUNG DER MENGE VON SUBSTANZEN IN VERTIEFUNGEN VON MIKROPLATTEN
PRODUCTION ET MESURE DE LUMIERE, ET DETERMINATION DES QUANTITES D'ANALYSAT DANS LES ALVEOLES D'UNE MICROPLAQUE

(30) Priority: 26.02.1999 US 121967 P
(43) Date of publication of application: 19.12.2001
(73) Proprietor: Packard Instrument Company, Inc., Downers Grove, IL 60515 (US)
(72) Inventor: DUEBENDORFER, Juerg, 8708 Maennedorf (CH); JONES, Donald, Lisle, IL 60532 (US); NEUMANN, Kenneth, Naperville, IL 60564 (US); WANG, Chang, East Lyme, CT 06333 (US)
(74) Representative: Grünecker, Kinkeldey, Stockmair & Schwanhäusser Anwaltssozietät
(86) International application number: PCT/US2000/004193
(87) International publication number: WO 2000/050860

(56) References cited:
- EP-A- 0 421 156
- WO-A-93/13423
- WO-A-97/11354
- WO-A-98/52047
- US-A- 4 626 684
- US-A- 5 557 415
- US-A- 5 589 351
- US-A- 5 682 244
- US-A- 5 919 707
- US-A- 5 920 399
- US-A- 5 926 270

## Description

### BACKGROUND OF THE INVENTION

The invention relates to a method according to Claim 1 or a system according to claim 17.

This invention relates generally to the measurement of light created by the absorption of high intensity light of one wavelength range and subsequent re-emission at another wavelength range, and specifically to an apparatus designed to conduct bioanalytical assays by measurement of the emitted light.

Bioanalytical binding assays are widely employed by the pharmaceutical, drug-discovery and biotechnology industries. A variety of such binding assays have been developed, including but not limited to, receptor binding, enzyme activity and inhibition, protein-protein interactions, and nucleic acid hybridization. The specific techniques used to perform these assays can be generally classified as heterogeneous or homogenous.

Heterogeneous assays involve the physical separation of reacted and unreacted species prior to sample analysis. The separation is usually effected by preferential adsorption of assay components onto a suitable solid support, followed by washing of that support. A related technique involves filtration of the assay mixture through an appropriate trapping medium. These separation techniques typically result in decreased assay accuracy, decreased assay precision and an increase in labor requirements, all due to the addition of a separation step.

Homogeneous assays involve the analysis of assay mixtures without the physical separation of reacted and unreacted species. Since homogeneous assays have fewer steps, the assay accuracy and precision are higher than their heterogeneous counterparts. Moreover, labor costs are reduced. However, homogeneous assays suffer from inherent interference problems. The interference occurs as a result of the simultaneous measurement of both reacted and unreacted species. Other potential interference problems include those caused by biological matrix effects and extraneous light production from system components. These interference problems may significantly reduce the usable dynamic range, accuracy, and precision of any assay.

Both heterogeneous and homogeneous assays can use a variety of labeling and detection technologies, including but not limited to, radioisotopic, fluorometric, luminometric, and colorimetric methods. The use of these technologies is well documented in the technical literature and well known to those skilled in the art. These technologies suffer from certain limitations and disadvantages, including poor sensitivity, poor dynamic range, occupational safety risks, signal instability, and high cost.

United States Patent No. 5,340,716 (Ullman, et. al. "Assay Method Utilizing Photoactivated Chemiluminescent Label") describes an alternative assay technology that possesses many of the advantages of a homogeneous system, while eliminating many of the interferences associated with traditional photon measurement technologies. The Ullman et al. patent describes the use of Luminescence Oxygen Channeling Immunoassay ("LOCI") procedures for conducting a variety of clinically important assays. Luminescent Oxygen Channeling Immunoassays can be used for quantitative determination of a variety of analytes in a wide range of concentrations. Such analytes include unbound drugs, DNA and immunoglobulins. The methods for carrying out these immunoassays have also been described in various technical publications. See, *e*.*g*., Edwin F. Ullman et al., "Luminescent Oxygen Channeling Immunoassay (LOCT™): sensitive, broadly applicable homogeneous immunoassay method"; Clinical Chemistry 42:9, pp. 1518-1526 (1996); Edwin Ullman, "Luminescent Oxygen Channeling Immunoassay (LOCI) for Human Thyroid Stimulating Hormone", in "Bioluminescence and Chemiluminescence, Proceedings of the 8th International Symposium on Bioluminescence and Chemiluminescence", Cambridge, September, 1994 (John Wiley & Sons). In the clinical laboratory, these assays are typically conducted in test tubes at sample volumes approaching 1mL.

The pharmaceutical, drug-discovery and biotechnology industries, along with bioanalytical instrumentation vendors, have established the microplate as the preferred format in which to perform assays. This device is a plastic plate containing multiple wells in a regular array, each of which may contain a unique sample. The current standard is the 96-well plate, and assays are typically conducted in an approximate volume of 200uL per well. As both reagent costs and sample throughput requirements increase, there is a need for an assay technology and measurement apparatus which have good precision and accuracy, high sensitivity, and can be converted to lower volume formats such as those used in 384-well and 1536-well microplates. There is also an existing need for integrated assay reaction and reading analyzers capable of operation in the nanoliter to microliter volume range.

An automatic robotic system and method for rapidly screening and identifying useful chemicals and liquid samples is revealed in the International patent application published, publication WO 98/52047. This paper reveals an apparatus comprising a fluorescent detector with an X-Y-positioner with two stepper motors to control the positioning of plate. The X-Y-positioner places the plate in a predetermined X-Y coordinate and corresponds to the array of an optical collection assembly. Light is produced by a light source. The light, an excitation light, passes a filter wheel, a field lens, a controllable aperture, another field lens, enters the area of an optical collection assembly and reflects emitted light from the probe. The emitted light passes through fibre optic bundles through a filter in an optical relay means. The optical relay means optically connects the bundle to a photon detection means.

The US patent 4,626,684 reveals an apparatus using a method for conducting fluorescence measurements, such as immuno assay, or a plurality of samples of a substance using pulsed or continuous light energy, front-end fluorescent optics, a mechanism which allows for a lateral and transverse scanning of rows and columns of valves and spectra emission analysis of the spectra from the exciter samples. It is revealed that a light source monochromator, an optical conductor directed to the surface of a substance in a well, by using fibre optic bundles and a detection monochromator can be optimised by extremely sensitive detectors concerning quality and quantity of performance.

The International patent application WO 93/13423 reveals an automated analysis equipment, an assay method for detecting cell surface protein and/or cytoplasmic receptor function. The use of light in combination with a sample is revealed. The use of fibre bundles is also revealed. An advantage over many inventions according to the state of the art is pipette controller but the results are not as exact as desired. Although it is possible to attain relatively good results when working with a high number of samples.

The US patent 5,557,415 reveals an apparatus and a method for inducing and detecting fluorescence. Light from an exciting light source, such as UV light from a flash lamp controlled by electronic controlling means, is collimated by a lens. From the collimated light, a band pass filter substantially removes all light which does not have a wavelength able to excite to fluorophores in the fluid. After filtration, the light passes a lens and is thereby focused onto a light receiving end of a fibre optic means, preferably a fibre bundle known per se. The exciting light is then guided by the fibre optical means to a light emitting end of the fibre optical means and from there to a solid sensor body of a material which is capable of transmitting the exciting light and fluorescence generated as a result of exciting with the exciting light, such as quartz.

Thus, one object of the present invention is to provide a compact apparatus that can be used in conjunction with an accurate method for producing and detecting light in liquid samples in microplate wells.

Another object of the present invention is to provide an apparatus for conducting extremely sensitive assays in very small sample volumes in high well density microplate formats.

Another object of the present invention is to provide a compact apparatus for producing and detecting light generated by biological samples using the LOCI technique, wherein the amount of light is proportional to the quantity of analyte present in the sample.

A further object of the present invention is to provide a compact apparatus for conducting bioanalytical assays using the LOCI technique by excitation of the liquid sample contained in an opaque well.

Another object of the present invention is to provide an apparatus for conducting bioanalytical assays using the LOCI technique for samples in the microliter to nanoliter volume range.

Yet another object of the present invention is to provide an apparatus for conducting bioanalytical assays using the LOCI technique in an automated fashion using microplates with 96, 384, or 1536 wells, or a labchip consisting of multiple channels.

A further object of the present invention is to provide an apparatus for conducting the aforementioned assays at a high speed by simultaneously measuring multiple wells on the microplate or channels on the labchip.

These objects can be achieved in a method which comprises the steps of said liquid producing in response to said excitation light an emitted light having a second wavelength band, said second wavelength band being shorter and separate from said first wavelength band; passing said emitted light through a detector through a filter bundle surrounding and co-axial with the filter bundle detecting said emitted light for a predetermined period of time after producing of said excitation light ceases, determining the amount of light received by said detector, said amount being indicative the amount of said emitted light produced by said liquid; and fielding said detector from said excitation light when said excitation light is being produced.

### SUMMARY OF THE INVENTION

In accordance with one aspect of the present invention, a system for measuring light emitted by a sample in a microplate well, is presented. This invention includes a light source, which produces light at a first wavelength band (the excitation wavelength band), a bifurcated fiber bundle which transmits the excitation light to the sample and the emitted light to the detector, a lens which directs the excitation light into the sample and collects the light emanating from the sample at a second wavelength band (the emission wavelength band), optionally, an emission band-pass filter which blocks extraneous light, including that which corresponds to the excitation wavelength band, while passing light in the emission wavelength band, a shutter which protects the detector, thus allowing the introduction of more excitation light into the sample, and a light detector.

Unlike traditional systems of this general type, the excitation wavelength band is at a longer wavelength, and the emission wavelength band is at a shorter wavelength. Moreover, the light emanating from the sample is collected after the excitation light source is turned off. These characteristics result in lower non-specific light production, thus enhancing the sensitivity of the system.

As a result of the use of fiber bundles which transmit light to and from the sample, the light source and detector may be placed remotely to the sample. This further permits the use of multiple sets of light sources and detectors, which provides a means for simultaneously quantifying samples in different wells, thus increasing throughput.

In accordance with another aspect of the present invention, a method for measuring light emanating from a sample, produced by excitation from a high intensity light source, is presented. This invention utilizes a system for the production of high intensity light at the excitation wavelength band, which passes the high intensity light through a fiber bundle into a sample in a microplate well. The light is emitted by the liquid subjected to the excitation light as the result of the presence of materials, such as a chemiluminescent material, through the fiber bundle and is directed through an emission band-pass filter that eliminates any extraneous light, including that which corresponds to the excitation wavelength band. The light is then passed through a shutter and to a light detector, such as a photomultiplier tube. A controller intermittently activates a light source to produce high intensity light and closes a shutter whenever the high intensity light is passed through the system. This controller could be a mechanical or electronic shutter or a light source gating circuit.

In accordance with a further aspect of the present invention, an analyzer for carrying out Luminescence Oxygen Channeling Immunoassays in microplates, is presented. A biological binding reaction is carried out in liquid samples in microplate wells. A high intensity light is introduced into the well. The light initiates a photochemical reaction that results in production of light of a different wavelength. The intensity of this light is proportional to the amount of the analyte present in the sample. The emitted light resulting from the photochemical reaction has a wavelength band which is shorter than the excitation wavelength band. The emitted light is collected by a lens and a fiber bundle located above the sample, and is then passed through a filter, which eliminates extraneous light, including that which corresponds to the excitation wavelength band. The light transmitted through the filter passes through an aperture in the shutter and is measured by a detector, such as a photomultiplier tube. A controller activates the light source and closes the shutter whenever the light source is activated.

### BRIEF DESCRIPTION OF THE DRAWINGS

FIGURE 1 is a perspective view of one embodiment of the apparatus constructed in accordance with the present invention.
FIGURE 2 is a perspective schematic view of the apparatus of FIGURE 1, showing the location of selected components and of microplates having a plurality of wells.
FIGURE 3 is a side-elevational view of a co-axial light guide of the apparatus of FIGURE 1.
FIGURE 4 is a cross-sectional view of the light guide of FIGURE 3 taken along line 4-4 of FIGURE 3.
FIGURE 5 is a side-elevational view of a light guide for 4 readhead fibers.
FIGURE 6 is a graph showing the results of a Tyrosine Kinase LOCI Sandwich Assay.
FIGURE 7 is a graph depicting GST - Girk Assay Signal to Noise.
FIGURE 8 is a graph depicting TNF- a Assay Signal to Noise.

### DETAILED DESCRIPTION OF THE INVENTION

It has been discovered that light can be measured with excellent sensitivity, accuracy and precision in small (i.e., nanoliter to microliter) sample volumes in wells of microplates, or from lab chips (lab-on-a-chip) using a compact apparatus that is optimized to read microplates having at least 96, 384 or 1536 wells per microplate. The sample is illuminated by high intensity light produced by a light source such as, but not limited to, a laser light source, in particular a compact laser diode. The light transmitted via a fiber bundle excites the sample, which converts the excitation light into emission light upon biomolecular binding occurrence. The emitted light is transmitted via a fiber bundle to a detector, such as, but not limited to, a photomultiplier tube, which detects and measures the amount of light after excitation ceases. The fiber bundles that transmit light at the excitation and emission wavelength bands are combined such that the common end of the bundle directly above the well includes both fiber types. The use of high intensity light results in extraordinary assay sensitivity, accuracy and precision. The system utilizes a shutter to shield the detector from this high intensity light during sample excitation. The system can also include a band-pass filter on the emission side, which eliminates extraneous light, including light corresponding to the excitation wavelength band. It has also been discovered that the system of the present invention can be used in assays based on the LOCI technique. The amount of light produced by the sample is proportional to the concentration of an analyte in the sample and the excitation power is between 670 to 690nm. The light can be efficiently generated by employing a high-intensity laser as the excitation source, emitting in the preferred wavelength region. The light emitted from the LOCI sample has a wavelength band between about 520nm and 620nm. This range is at a shorter wavelength than that of the excitation wavelength band. The high-intensity light is prohibited from entering the light detector by means of a shutter, which is closed while the light source is active. After the excitation source is turned off, the shutter is opened, and this allows the light indicative of the analyte to enter the detector. It has been further discovered that, in most applications, the light detector can be protected by either a mechanical, electronic or optical shutter, photomultiplier tube-gating device or by interference filters having high out-band blocking properties. The shutter prevents light from entering the detector while the laser diode is active; the filter prevents light outside the emitted wavelength band from entering the detector. The preferred detector is a standard photomultiplier tube.

A laser diode must emit sufficient light to produce the required assay performance. Generally, the maximum power output of the laser diode should be from approximately 1 milliWatt (mW) to 1 Watt, preferably from 30 mW to 200 mW.

The light is carried to and from the well by fiber bundles. Any fiber bundle that transmits light at the wavelength of interest can be used in connection with this invention. However, the preferred fiber bundles are bundles consisting of fused silica multimode fibers, having diameters between 50 and 500 micrometers.

The filter used to eliminate extraneous light, including that which corresponds to the excitation wavelength band, can be any narrow or broad, optical filter capable of transmitting light in the emission wavelength band of interest and blocking light in the out-band emission wavelength region. The preferred filters are interference filters or colored-glass filters.

The light bundles are combined at the end facing the well in a configuration that allows the emitted light to be collected efficiently, and transmitted to the detector. Preferably, the fibers transmitting the excitation light are in the center of the end section, and occupy a low percentage of the overall bundle diameter. Generally, the ratio of the cross-sectional area of fibers transmitting light from the excitation light source, to the cross-sectional area of fibers transmitting light to the detector, is in the approximate range from 0.01 to 50 percent, preferably from 1 to 10%.

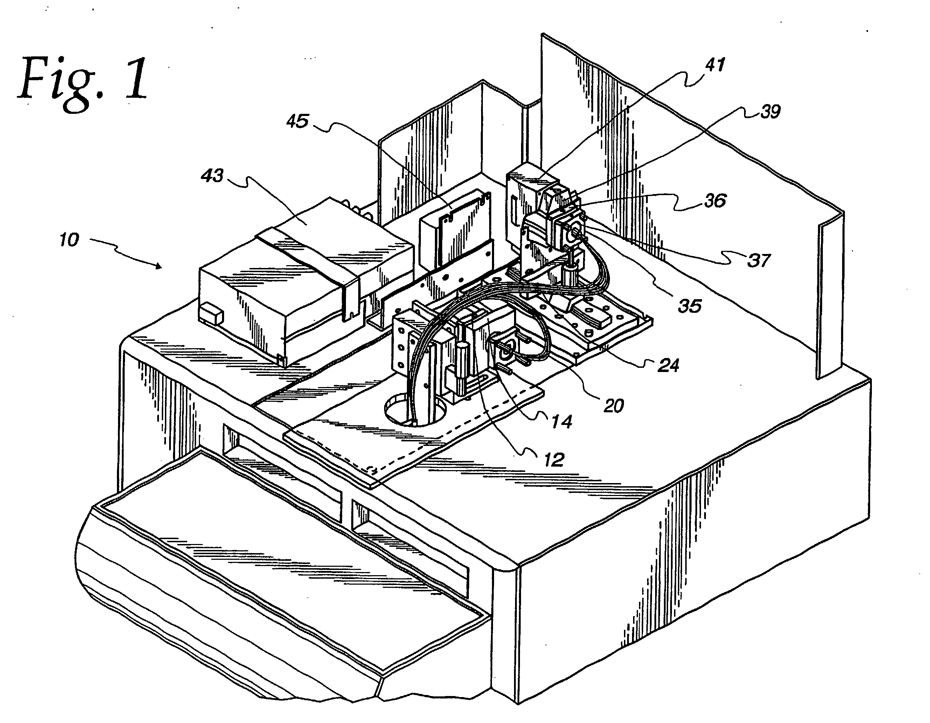

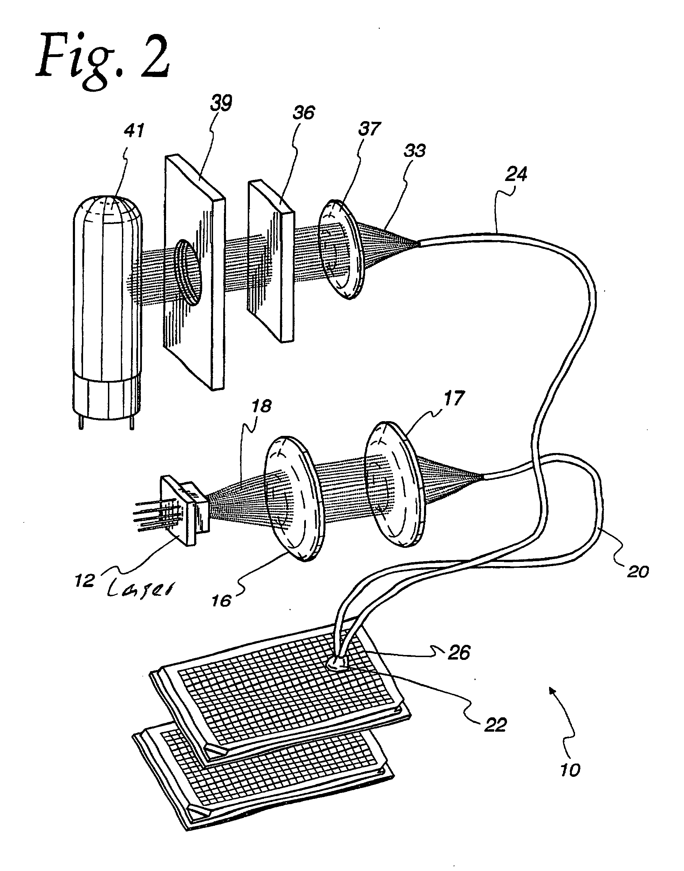

The preferred embodiment of the present invention is shown in the accompanying drawings. Figures 1 and 2 display an analyzer, designated by the numeral 10, which is constructed in accordance with the present invention. The analyzer 10 includes a laser diode 12 and a lens compartment 14 containing two lenses. The currently preferred laser diode is CQL806/30 diode marketed by Philips. This diode emits light at 675nm at a maximum optical output power of 30mW. The CQL802/D diode marketed by Philips produces three times higher signal levels; however, the cost of this device is also three times higher compared to other commonly used diodes. Thus, it is preferred only for applications where the CQL806/30 diode does not provide sufficient optical illumination power for the desired assay performance. The two lenses are not shown in Figure 1 but are shown in Figure 2 and are designated by numerals 16 and 17. As shown schematically in figure 2, light 18 emitted by the laser diode 12, is directed by the lenses 16 and 17 into a fiber bundle 20. Currently, preferred fiber bundles consist of individual multimode fibers made of fused silica with a numerical aperture of 0.22 to 0.4. The total diameter of the currently preferred bundle is approximately 3mm at the sample end. Coaxial fiber arrangement at the common end is preferred, especially for 1536-well plates, because the light at the excitation wavelength could be dispersed over adjacent wells in the microplate. As shown in figures 1 and 2, the fiber bundle 20 extends from the lens compartment 14 to a well of a microplate 22. Currently preferred are microplates having either 96, 384 or 1536 wells. The fiber bundle 20 is joined with the fiber bundle 24 to form a bifurcated bundle 26.

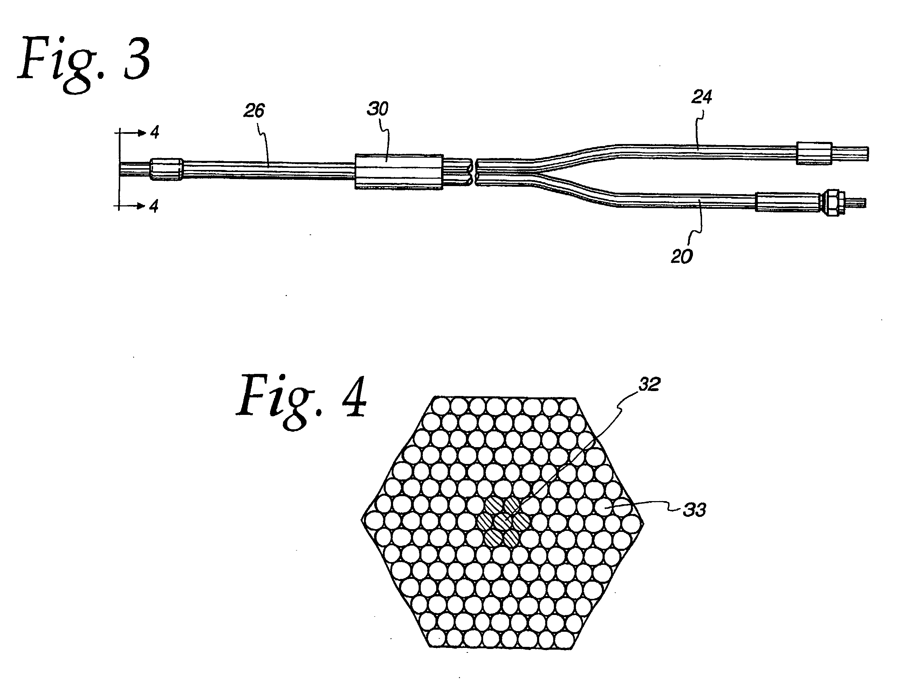

To improve light collection efficiency and reduce cross-talk between wells in a microplate, a lens (not shown) is mounted at the sample end of the bifurcated bundle 26. The lens collimates the light emerging from the excitation fibers and directs it into the sample well. The lens defines the field of view in the well by its clear aperture and its numerical aperture. This is needed to mask the effective area from which the emitted light is collected to a size suitable for wells with different diameters. A lens having about a 3mm diameter is preferred for 1536-well microplates, while larger clear-aperture lenses are preferred for lower density microplates, such as 384-well microplates. The use of high-numerical aperture lenses is preferred since more light emerging from the sample well can be collected. A typical numerical aperture shall be 0.5. The lens should be placed between 0.25mm and 2mm above the microplates. The preferred distance is 1mm. The construction of the fiber bundles 20, 24 and 26 is shown in figures 3 and 4. As displayed in figure 3, fiber bundles 20 and 24 are joined by a transition piece 30. As shown in figure 4, the bifurcated fiber bundle 26 has 169 fibers. Seven of these fibers, which are darkened and designated by a numeral 32, are the excitation fibers. One hundred sixty-two of the fibers located around the excitation fibers are the emission fibers, denoted by 33. The light carried by the fiber bundle 20 enters into the fiber bundles 32. The light then enters the medium of the well and the emitted light is collected by the fibers 33. The emitted light is carried by fibers 33 into the fiber bundle 24. As shown in figures 1 and 2, the fiber bundle 24 transmits emitted light to the emission assembly 35. As shown schematically in figure 2, the emission assembly 35 includes a lens 37, which collimates the light collected from the fiber bundle 24 and directs it into an emission band-pass filter 36. Since the laser diode emits a large amount of light at 680nm, the emission filters must effectively block this light to prevent damage to the photomultiplier tube if no shutter is used. At the present time, the custom 570DF100 filter manufactured by Omega Optical, Inc., is preferred. The emission band-pass filter 36 transmits light in the 520-620nm wavelength range through a mechanical shutter 39 into a photomultiplier module 41. The currently preferred photomultiplier module is H6240-01, including a photomultiplier tube that has increased sensitivity in the emission wavelength of interest. This module is marketed by Hamamatsu Photonics.

The hardware and user interfaces are controlled by an in-house developed software package, which includes full instrument control, assay definition, sample mapping, data storage and reporting, and database management.

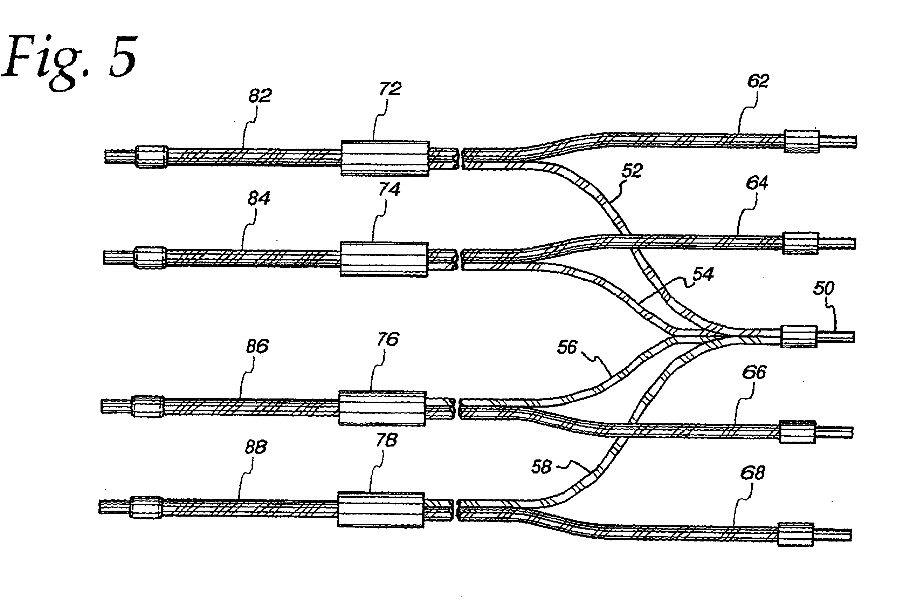

Another embodiment of the fiber bundle for use in the analyzer of the present invention is shown in FIGURE 5. The fiber bundle 50 shown in figure 5 collects light emitted from a single laser diode (not shown) and directs the light to four fiber bundles 52, 54, 56 and 58. The fiber bundles 52, 54, 56 and 58 which are joined with corresponding emission fiber bundles 62, 64, 66 and 68 in the same manner as the fiber bundles shown in figure 3 to produce the cross-sectional view as shown in figure 4. Figure 5 shows an example of having one common light source for measuring four samples in four different wells simultaneously by means of four emission assemblies. Other numbers of light sources and detectors per channel are possible. In particular, the combination of having one light source illuminating multiple wells, and one (multichannel) detector to detect the emission light of multiple wells can be implemented.

### EXAMPLES

The following examples are provided to further illustrate the present invention. They are not intended to limit the present invention in any manner.

### Example 1: Enzyme Assay (Tyrosine Kinase)

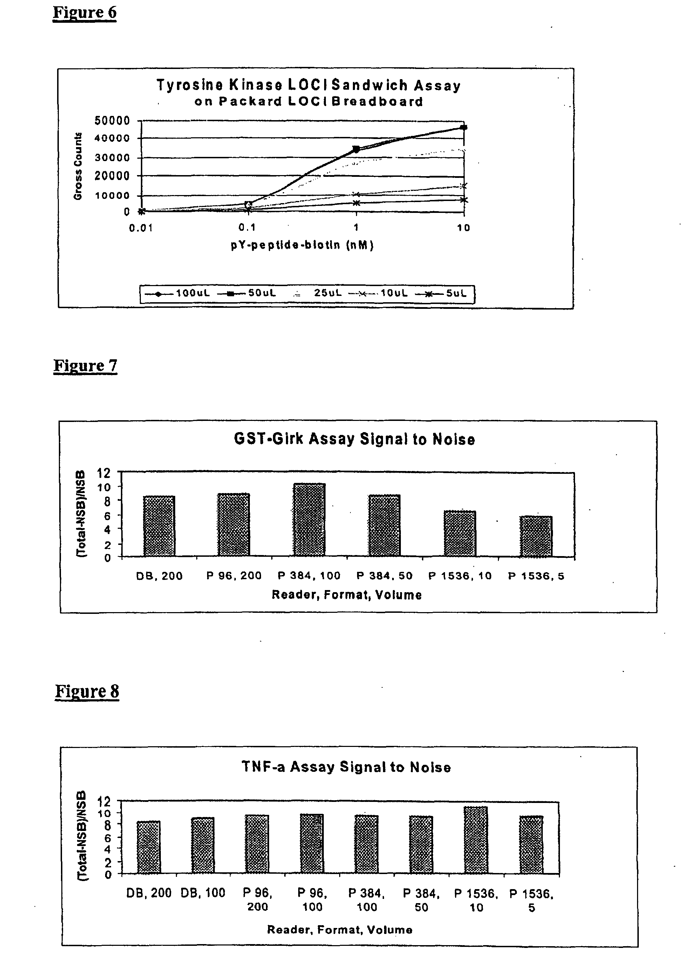

In this example, an antiphosphotyrosine antibody is conjugated to the LOCI Chemiluminescer bead. Streptavidin is conjugated to the LOCI Sensitizer bead. Biotinylated phosphotyrosine peptide is diluted in assay buffer to known concentrations. Appropriate volumes of each component are added to wells of a microplate, mixed, and incubated. The microplate is then loaded into the measurement apparatus and the light emitted by each well is measured. The light intensity is proportional to the concentration of the biotinylated phosphotyrosine peptide. Figure 6 depicts typical results for a range of sample volumes.

Other experiments have demonstrated a sensitivity of 125 femtograms of the phosphotyrosine peptide in as little as 60nL in a labchip, wherein reagents are dispensed, mixed, incubated, and analyzed in an integrated miniaturized disposable device.

### Example 2: Protein-Protein Assay (GST-Girk)

In this example, an anti-GST antibody is conjugated to the LOCI Chemiluminescer bead. Streptavidin is conjugated to the LOCI Sensitizer bead. Biotinylated GBγ protein is diluted in assay buffer to a known concentration. Appropriate volumes of each component are added to wells of a microplate, mixed, and incubated. The microplate is then loaded into the measurement apparatus and the light emitted by each well is measured. The light intensity is proportional to the concentration of the biotinylated GBγ protein. Figure 7 depicts typical Signal to Blank ratios for a range of sample volumes and microplate formats.

### Example 3: Receptor Binding Assay (TNF-α)

In this example, an anti-TNFαRI antibody is conjugated to the LOCI Chemiluminescer bead. Streptavidin is conjugated to the LOCI Sensitizer bead. Biotinylated TNFα and TNFαRI receptor are diluted in assay buffer to known concentrations. Appropriate volumes of each component are added to wells of a microplate, mixed, and incubated. The microplate is then loaded into the measurement apparatus and the light emitted by each well is measured. The light intensity is proportional to the concentration of the biotinylated TNFαRI Figure 8 depicts typical Signal to Blank ratios for a range of sample volumes and microplate formats.

## Claims

1. A method for measuring light emitted by a liquid subjected to an excitation light said liquid contained in a vessel, said method comprising:
(a) producing an excitation light (18) having a first wavelength band, for a predetermined time period;
(b) transmitting said excitation light (18) into said liquid through a fiber bundle (20; 26); **characterised by** comprising the steps of:
(c) said liquid producing, in response to said excitation light (18), an emitted light having a second wavelength band, said second wavelength band comprising wavelengths being shorter and separated from said first wavelength band;
(d) passing said emitted light to a detector (41); through a fiber bundle (24; 26) surrounding and coaxial with the bundle of (b);
(e) detecting said emitted light for a predetermined period of time after producing of said excitation light ceases;
(f) determining the amount of light received by said detector (41), said amount being indicative of the amount of said emitted light produced by said liquid; and,
(g) shielding said detector (41) from said excitation light (18) when said excitation light (18) is being produced.

2. The method of claim 1 further comprising the step of passing said emitted light through a filter (36) to exclude at least the light at said first wavelength band, before step (d).

3. The method of one of the claims 1 or 2 wherein the emitted light passing through the filter (36) has wavelengths in the range from about 500 nanometers to about 650 nanometers.

4. The method of one of the claims 1 to 3 wherein the emitted light passing through the filter (36) has wavelengths in the range from about 520 nanometers to about 620 nanometers.

5. The method of one of the claims 1 to 4 wherein said excitation light (18) is produced by a laser diode, a gas laser, a solid state laser or a light emitting diode.

6. The method of one of the claims 1 to 5 wherein the first wavelength band is in a range from 670 nanometers to 690 nanometers.

7. The method of one of the claims 1 to 6 further comprising repeating steps (a) through (g) a predetermined number of times or for a predetermined time for the same liquid in the same vessel and determining a composite amount of light received by said detector (41).

8. The method of one of the claims 1 to 7 wherein said fiber bundles (20, 24, 26) comprise a bifurcated fiber bundle (26) having a common end facing said liquid, a first fiber bundle (20) in the center of said bundle (26) for transmitting said excitation light (18), and a second fiber bundle (24) surrounding and coaxial with said first fiber bundle (20) for passing said emitted light.

9. The method of one of the claims 1 to 8 wherein the ratio of the excitation fiber bundles (20) to the emission fiber bundles (24) is in the range from about 0.01 to about 0.1.

10. The method of one of the claims 1 to 9 wherein the ratio of the excitation fiber bundles (20) to the emission fiber bundles (24) is in the range from about 0.02 to about 0.06.

11. The method of one of the claims 1 to 10 wherein said emitted light is produced by chemiluminescence.

12. The method of one of the claims 1 to 11 wherein said method is for conducting luminescence oxygen channeling immunoassays (LOCI).

13. The method of one of the claims 1 to 12 wherein the step of shielding is carried out by using a shutter (39).

14. The method of one of the claims 1 to 13 wherein the light shutter (39) is a mechanical device, an electronic device or a photomultiplier tube-gating device.

15. The method of claims 1 to 14 wherein the ratio of excitation time of (a) to the detecting time of (e) is between 0.1 and 0.5.

16. The method of one of the claims 1 to 15 wherein the ratio of excitation time to detecting time is about 0.3.

17. An optical measurement system for producing excitation light (18) and measuring light emitted by a sample by a photochemical reaction in a vessel, said system comprising:
a light source (12), said light source producing light in an excitation wavelength band;
a first fiber bundle (20) for transmitting the light (18) to liquid in said vessel; **characterised by** comprising
a second fiber bundle (24) for transmitting the light emitted from said well, said light being emitted at an emitted wavelength band comprising wavelengths being shorter than and separated from said excitation wavelength band;
a filter (36) reducing light at an excitation wavelength band and passing at least a portion of the emitted light;
a detector receiving said emitted light and determining the amount of said emitted light;
a shutter (39); and
a controller for closing said shutter whenever said light source is producing said excitation light.

18. The system of claim 17 wherein the first fiber bundle (20) and the second fiber bundle (24) are joined to produce an end section having parallel first fiber bundle fibers and second fiber bundle fibers, in which the second fiber bundle (24) fibers (33) surround and are coaxial with the first fiber bundle (20) fibers (33).

19. The system of one of the claims 17 or 18 wherein the ratio of cross-sectional areas of the first fiber bundle (20) to the second fiber bundle (24) is the range from about 0.01 to about 0.1.

20. The system of one of the claims 17 to 19 wherein said ratio is in the range from about 0.02 to about 0.06.

21. The system of one of the claims 17 to 20 wherein the excitation wavelength band extends from about 670 nanometers to about 690 nanometers.

22. The system of one of the claims 17 to 21 wherein the filter (36) passes light in the wavelength band from about 500 nanometers to about 650 nanometers.

23. The system of one of the claims 17 to 22 wherein the filter (36) passes light in the wavelength band from about 520 nanometers to about 620 nanometers.

24. The system of one of the claims 17 to 23 wherein the shutter (39) is a mechanical device, an electronic device or a photomultiplier tube-gating device.

25. The system of one of the claims 17 to 24 further comprising a plurality of said first and second fiber bundles (20; 24) for carrying said excited light (18) to a plurality of vessels.

26. The system of one of the claims 17 to 25 wherein the volume of said liquid is in the range from about 0.01 to about 300 microliters.

27. The system of one of the claims 17 to 26 wherein the light source is a laser diode, a gas laser, a solid state laser or a light emitting diode.

## Patentansprüche

1. Eine Methode zum Messen von Licht, welches von einer Flüssigkeit ausgestrahlt wird, welche von einem Anregungslicht beaufschlagt wird, wobei diese Art Flüssigkeit in einem Behälter enthalten ist, wobei die Methode folgendes umfasst:
(a) Erzeugen eines Anregungslichtes (18) mit einem ersten Wellenlängenband für einen festgelegten Zeitraum;
(b) Übertragen des besagten Anregungslichtes (18) in besagte Flüssigkeit durch ein Faserbündel (20;26),
welche **dadurch gekennzeichnet ist, dass** sie folgende Schritte umfasst:
(c) dass besagte Flüssigkeit in Antwort auf besagtes Anregungslicht (18), ein Licht mit einer zweiten Wellenlängenbandbreite emittiert, wobei besagte zweite Wellenlängenbandbreite Wellenlängen umfasst, die kürzer und separat von dem ersten Wellenlängenband sind;
(d) dass besagtes imitierte Licht durch einen Detektor (41) hindurchgeht, und zwar durch ein Faserbündel (24;26), welches koaxial zu dem Bündel aus (b) ist und dieses umgibt;
(e) dass nach dem das Erzeugen des Anregungslichtes aufgehört hat, das emittierte Licht für eine bestimmte Zeitdauer detektiert wird;
(f) dass die Menge an Licht, welches von dem Detektor (41) empfangen wird, detektiert wird, wobei besagte Menge ein Indikator für die Menge an emittiertem Licht, welches durch die besagte Flüssigkeit produziert wird, ist und
(g) dass besagter Detektor (41) von dem Anregungslicht (18) abgeschirmt ist, während das Anregungslicht (18) produziert wird.

2. Die Methode in Anspruch 1, die des Weiteren den Schritt des Hindurchgehens von besagtem emittierten Licht durch einen Filter (36) umfasst, um wenigstens das Licht von besagter erster Wellenlängenbandbreite auszunehmen, bevor Schritt (d) durchgeführt wird.

3. Die Methode nach einem der Ansprüche 1 oder 2, wobei das emittierte Licht durch einen Filter (36) hindurchgeht und Wellenlängen in einem Bereich von ungefähr 500 Nanometem bis ungefähr 650 Nanometem aufweist.

4. Die Methode nach einem der Ansprüche 1 bis 3, wobei das emittierte Licht durch einen Filter (36) hindurchgeht und Wellenlängen in einem Bereich von ungefähr 520 Nanometem bis ungefähr 620 Nanometern aufweist.

5. Die Methode nach einem der Ansprüche 1 bis 4, wobei das Anregungslicht (18) durch eine Leserdiode, einen Gaslaser, einen Feststofflaser oder eine lichtemittierende Diode erzeugt wird.

6. Die Methode nach einem der Ansprüche 1 bis 5, wobei die erste Wellenlängenbandbreite in einem Bereich von 670 Nanometem bis 690 Nanometem befindlich ist.

7. Die Methode nach einem der Ansprüche 1 bis 6, die des Weiteren das Wiederholen der Schritte (a) bis (g) umfasst, wobei die Wiederholung nach einer festgelegten Anzahl oft durchgeführt wird oder für eine festgelegte Zeitdauer für dieselbe Flüssigkeit in demselben Gefäß durchgeführt wird und eine Teilmenge des Lichtgemisches, weiche von besagtem Detektor (41) erhalten wird, determiniert wird.

8. Die Methode nach einem der Ansprüche 1 bis 7, wobei die besagten Faserbündel (20, 24, 26) gabelförmige Faserbündel (26) umfasst, wobei die gemeinsamen Enden besagter Flüssigkeit zugewandt sind, ein erstes Faserbündel (20) in dem Zentrum von besagtem Bündel (26) zum Übertragen von besagtem Anregungslicht (18) umfasst ist und ein zweites Faserbündel (24) besagtes erstes Faserbündel (20) umgibt, zu diesem koaxial ist und zum Hindurchführen besagten emittierten Lichtes ausgestaltet ist.

9. Die Methode nach einem der Ansprüche 1 bis 8, wobei das Verhältnis der Anregungsfaserbündel (20) zu den Emissionsfaserbündeln (24) in einem Verhältnis von ungefähr 0,01 bis ungefähr 0,1 liegt.

10. Die Methode nach einem der Ansprüche 1 bis 9, wobei das Verhältnis der Anregungsfaserbündel (20) zu den Emissionsfaserbündeln (24) in einem Bereich von ungefähr 0,02 bis ungefähr 0,06 liegt.

11. Die Methode nach einem der Ansprüche 1 bis 10, wobei besagtes Emissionslicht durch Chemolumineszenz erzeugt ist.

12. Die Methode nach einem der Ansprüche 1 bis 11, wobei besagte Methode zum Ausführen von Lumineszenz Oxygen Channeling Immunoassays (LOCI) vorgesehen ist.

13. Die Methode nach einem der Ansprüche 1 bis 12, wobei der Schritt des Abschirmens durch das Benutzen eines Verschlusses (39) durchgeführt wird.

14. Die Methode nach einem der Ansprüche 1 bis 13, wobei der Lichtverschließer (39) eine mechanische Vorrichtung (39), eine elektronische Vorrichtung oder eine Photomultiplikationsröhrenschranken-Vorrichtung ist.

15. Die Methode nach einem der Ansprüche 1 bis 14, wobei das Verhältnis des Anregungszeitraumes von (a) zum Detektieren der Zeit von (e) zwischen 0,1 und 0,5 liegt.

16. Die Methode nach einem der Ansprüche 1 bis 15, wobei das Verhältnis des Anregungszeitraumes zum Detektionszeitraumes ungefähr 0,3 ist.

17. Ein optisches Messsystem zum Produzieren von Anregungslicht (18) und zum Messen von Licht, welches durch eine Probe mittels einer photochemischen Reaktion in einem Behälter emittiert wird, wobei besagtes System folgendes umfasst:
- eine Lichtquelle (12), wobei besagte Lichtquelle ein Licht einer bestimmten Anregungswellenlängenbandbreite erzeugt,
- ein erstes Faserbündel (20) zum Übertragen von Licht (18) zu einer Flüssigkeit in besagtem Behälter,
wobei das System **dadurch gekennzeichnet ist, dass**
- es ein zweites Faserbündel (24) zum Übertragen des Lichtes, welches von besagter Quelle emittiert wird, umfasst, wobei besagtes Licht mit einer bestimmten Emittierungswellenlängenbandbreite mit Wellenlängenbrandbreiten emittiert werden, die kürzer und separat von einer Anregungswellenlängenbandbreite sind,
- ein Filter (36), welcher das Licht, mit einer Anregungswellenlängenbandbreite reduziert, und wenigstens einen Teil des emittierten Lichtes hindurchlässt, umfasst ist,
- ein Detektor zum Aufnehmen des besagten Emissionslichtes und Determinieren der Menge von besagtem Emissionslichtes umfasst ist,
- ein Verschluss (39) umfasst ist, und
- ein Controller zum Schließen des besagten Verschlusses, wann immer besagte Lichtquelle besagtes Anregungslicht erzeugt, umfasst ist.

18. Das System nach Anspruch 17, wobei das erste Faserbündel (20) und das zweite Faserbündel (24) zusammengefügt sind, um einen Endbereich zu erzeugen, der parallel zu den ersten Faserbündelfasem und zu den zweiten Faserbündelfasem ist, wobei die zweiten Faserbündelfasem (33) koaxial zu den ersten Faserbündelfasem (33) sind und diese umgeben.

19. Das System nach einem der Ansprüche 17 oder 18, wobei das Verhältnis der Querschnitte der ersten Faserbündel (20) zu dem zweiten Faserbündel (24) in einem Bereich von ungefähr 0,01 bis ungefähr 0,1 liegt.

20. Das System nach einem der Ansprüche 17 bis 19, wobei das besagte Verhältnis in einem Verhältnis von ungefähr 0,02 bis ungefähr 0,06 befindlich ist.

21. Das System nach einem der Ansprüche 17 bis 20, wobei die Exzitationswellenlängenbandbreite sich von ungefähr 670 Nanometem bis ungefähr 690 Nanometem erstreckt.

22. Das System nach einem der Ansprüche 17 bis 21, wobei der Filter (36) Licht in einem Wellenlängenbandbereich von ungefähr 500 Nanometem bis ungefähr 650 Nanometem hindurchlässt.

23. Das System nach einem der Ansprüche 17 bis 22, wobei der Filter (36) Licht in einem Wellenlängenbandbereich von ungefähr 520 Nanometem bis ungefähr 620 Nanometern hindurchlässt.

24. Das System nach einem der Ansprüche 17 bis 23, wobei der Verschluss (39) eine mechanische Vorrichtung, eine elektronische Vorrichtung oder eine Photomultiplikationsröhrenschranken-Vorrichtung ist.

25. Das System nach einem der Ansprüche 17 bis 24, das des Weiteren eine Vielzahl von ersten und zweiten Faserbündel (20; 24) zum Übertragen von besagtem Anregungslicht (18) zu einer Vielzahl von Behältern umfasst.

26. Das System nach einem der Ansprüche 17 bis 25, wobei das Volumen besagter Flüssigkeit in einem Bereich von ungefähr 0,01 bis ungefähr 300 Mikrolitem befindlich ist.

27. Das System nach einem der Ansprüche 17 bis 26, wobei die Lichtquelle eine Laserdiode, ein Gaslaser, ein Feststofflaser oder eine lichtemittierende Diode ist.

## Revendications

1. Procédé destiné à mesurer de la lumière émise par un liquide soumis à une lumière d'excitation, ledit liquide étant contenu dans un récipient, ledit procédé comprenant :
(a) la production d'une lumière d'excitation (18) présentant une première gamme de longueurs d'onde, pendant un intervalle de temps prédéterminé ;
(b) la transmission de ladite lumière d'excitation (18) dans ledit liquide, par l'intermédiaire d'un faisceau de fibres (20 ; 26), **caractérisé en ce qu'**il comprend les étapes suivantes :
(c) la production par ledit liquide, en réponse à ladite lumière d'excitation (18), d'une lumière émise présentant une seconde gamme de longueurs d'onde, ladite seconde gamme de longueurs d'onde comprenant des longueurs d'onde qui sont plus courtes et séparées de ladite première gamme de longueurs d'onde ;
(d) la transmission de ladite lumière émise vers un détecteur (41) ; par l'intermédiaire d'un faisceau de fibres (24 ; 26) entourant le faisceau (b) et étant coaxial à celui-ci,
(e) la détection de ladite lumière émise pendant un intervalle de temps prédéterminé après que la production de ladite lumière d'excitation cesse ;
(f) la détermination de ladite quantité de lumière reçue par ledit détecteur (41), ladite quantité indiquant la quantité de ladite lumière émise produite par ledit liquide ; et
(g) le blindage dudit détecteur (41) vis-à-vis de ladite lumière d'excitation (18) lorsque ladite lumière d'excitation (18) est produite.

2. Procédé selon la revendication 1, comprenant en outre l'étape consistant à faire passer ladite lumière émise à travers un filtre (36) pour exclure au moins la lumière de ladite première gamme de longueurs d'onde, avant l'étape (d).

3. Procédé selon l'une des revendications 1 et 2, dans lequel la lumière émise traversant le filtre (36) comporte des longueurs d'onde dans la plage d'environ 500 nanomètres à environ 650 nanomètres.

4. Procédé selon l'une des revendications 1 à 3, dans lequel la lumière émise traversant le filtre (36) présente des longueurs d'onde dans la plage d'environ 520 nanomètres à environ 620 nanomètres.

5. Procédé selon l'une des revendications 1 à 4, dans lequel ladite lumière d'excitation (18) est produite par une diode laser, un laser à gaz, un laser à état solide ou une diode électroluminescente.

6. Procédé selon l'une des revendications 1 à 5, dans lequel la première gamme de longueurs d'onde se situe dans la plage de 670 nanomètres à 690 nanomètres.

7. Procédé selon l'une des revendications 1 à 6, comprenant en outre la répétition des étapes (a) à (g) un nombre prédéterminé de fois ou bien pendant une durée prédéterminée pour le même liquide dans le même récipient et la détermination d'une quantité composite de lumière reçue par ledit détecteur (41).

8. Procédé selon l'une des revendications 1 à 7, dans lequel lesdits faisceaux de fibres (20, 24, 26) comprennent un faisceau de fibres séparés en deux (26) comportant une extrémité commune en regard dudit liquide, un premier faisceau de fibres (20) au centre dudit faisceau (26) destiné à transmettre ladite lumière d'excitation (18), et un second faisceau de fibres (24) entourant ledit premier faisceau de fibres (20) et étant coaxial à celui-ci destiné à transmettre ladite lumière émise.

9. Procédé selon l'une des revendications 1 à 8, dans lequel le rapport des faisceaux de fibres d'excitation (20) aux faisceaux de fibres d'émission (24) se situe dans la plage d'environ 0,01 à environ 0,1.

10. Procédé selon l'une des revendications 1 à 9, dans lequel le rapport desdits faisceaux de fibres d'excitation (20) aux faisceaux de fibres d'émission (24) se situe dans la plage d'environ 0,02 à environ 0,06.

11. Procédé selon l'une des revendications 1 à 10, dans lequel ladite lumière émise est produite par chimiluminescence.

12. Procédé selon l'une des revendications 1 à 11, dans lequel ledit procédé est destiné à réaliser des immunodosages à canalisation d'oxygène par luminescence (LOCI).

13. Procédé selon l'une des revendications 1 à 12, dans lequel l'étape de blindage est exécutée en utilisant un obturateur (39).

14. Procédé selon l'une des revendications 1 à 13, dans lequel l'obturateur de lumière (39) est un dispositif mécanique, un dispositif électronique ou un dispositif de commande de tube photomultiplicateur.

15. Procédé selon les revendications 1 à 14, dans lequel le rapport du temps d'excitation de (a) au temps de détection de (e) se situe entre 0,1 et 0,5.

16. Procédé selon l'une des revendications 1 à 15, dans lequel le rapport du temps d'excitation au temps de détection est d'environ 0,3.

17. Système de mesure optique destiné à produire une lumière d'excitation (18) et mesurer la lumière émise par un échantillon par une réaction photochimique dans un récipient, ledit système comprenant :
une source de lumière (12), ladite source de lumière produisant une lumière dans une gamme de longueurs d'onde d'excitation ;
un premier faisceau de fibres (20) destiné à transmettre de la lumière (18) vers le liquide dans ledit récipient ; **caractérisé en ce qu'**il comprend
un second faisceau de fibres (24) destiné à transmettre de la lumière émise à partir dudit puits, ladite lumière étant émise au niveau d'une gamme de longueurs d'onde émise comprenant des longueurs d'onde qui sont plus courtes que ladite gamme de longueurs d'onde d'excitation et séparées de celle-ci ;
un filtre (36) réduisant la lumière à une gamme de longueurs d'onde d'excitation et laissant passer au moins une partie de la lumière émise,
un détecteur recevant ladite lumière émise et déterminant la quantité de ladite lumière émise ;
un obturateur (39) ; et
un contrôleur destiné à fermer ledit obturateur à chaque fois que ladite source de lumière produit ladite lumière d'excitation.

18. Système selon la revendication 17, dans lequel le premier faisceau de fibres (20) et le second faisceau de fibres (24) sont reliés pour produire une section d'extrémité comportant des fibres de premier faisceau de fibres et des fibres de second faisceau de fibres parallèles, où les fibres (33) du second faisceau de fibres (24) entourent les fibres (33) du premier faisceau de fibres (20) et sont coaxiales à celles-ci.

19. Système selon l'une des revendications 17 et 18, dans lequel le rapport des zones en section transversale du premier faisceau de fibres (20) au second faisceau de fibres (24) se situe dans la plage d'environ 0,01 à environ 0,1.

20. Système selon l'une des revendications 17 à 19, dans lequel ledit rapport se situe dans la plage d'environ 0,02 à environ 0,06.

21. Système selon l'une des revendications 17 à 20, dans lequel la gamme de longueurs d'onde d'excitation s'étend d'environ 670 nanomètres à environ 690 nanomètres.

22. Système selon l'une des revendications 17 à 21, dans lequel le filtre (36) transmet de la lumière dans la gamme de longueurs d'onde d'environ 500 nanomètres à environ 650 nanomètres.

23. Système selon l'une des revendications 17 à 22, dans lequel le filtre (36) transmet de la lumière dans la gamme de longueurs d'onde d'environ 520 nanomètres à environ 620 nanomètres.

24. Système selon l'une des revendications 17 à 23, dans lequel l'obturateur (39) est un dispositif mécanique, un dispositif électronique ou un dispositif de commande de tube photomultiplicateur.

25. Système selon l'une des revendications 17 à 24, comprenant en outre une pluralité desdits premier et second faisceaux de fibres (20 ; 24) destinés à transporter ladite lumière excitée (18) vers une pluralité de récipients.

26. Système selon l'une des revendications 17 à 25, dans lequel le volume dudit liquide se situe dans la plage d'environ 0,01 à environ 300 microlitres.

27. Système selon l'une des revendications 17 à 26, dans lequel la source de lumière est une diode laser, un laser à gaz, un laser à état solide ou une diode électroluminescente.
